# EUROPEAN PATENT APPLICATION

(11) **EP 2 653 249 A1**
(43) Date of publication of application: **23.10.2013**
(21) Application number: 13163893.4
(22) Date of filing: 16.04.2013
(51) Int. Cl.: B23B 31/10, B23B 31/12

(54) **Chuck for rotary power tool**

(30) Priority: 17.04.2012 US 201213448816
(71) Applicant: Black & Decker Inc., Newark, Delaware 19711 (US)
(72) Inventor: Campbell, David Charles, Bel Air, MD Maryland 21014 (US); Mattucci, Marco Alessandro, Baltimore, MD Maryland 21234 (US)
(74) Representative: Clayton-Hathway, Anthony Nicholas

(57) **Abstract**

A chuck for a power tool (10) having a rotatable drive shaft. The chuck includes a chuck body (24) and an inner sleeve (22) defining a cavity into which the chuck body (24) is rotatably received. An outer sleeve (26) is disposed concentrically around the inner sleeve (22), the outer sleeve (26) being non-rotatably but axially slidably coupled to the inner sleeve (22). A cover plate (48) may be provided non-rotatably coupled to the chuck body (24). A locking cup (28) may be non-rotatably coupled to the power tool (10) and disposed adjacent to the chuck. At least one locking element (52) may be coupled to the cover plate (48). The locking element (52) is biased to prevent rotational movement in at least one rotational direction between the cover plate (48) and the locking cup (28), or between the cover plate (48) and the outer sleeve (26).

## Description

The present disclosure relates to a chuck for a rotary power tool.

Chucks are used in conjunction with rotary power tools for releasably engaging assorted drill bits or accessory tools. Various keyless chucks have been designed to be operated by hand wherein a user can rotate a chuck sleeve to cause the jaws of the chuck assembly to grippingly engage and disengage a drill bit or accessory tool. Typically, the user of the rotary power tool rotates an adjustable chuck sleeve with one hand while holding a drill bit inside the jaw members until the drill bit is locked in place. While various different types of chucks are known in the art and are desirable for a variety of applications, there remains a need in the art for an improved chuck.

First, second and third aspects of the present invention are provided by the independent claims. Preferred features are provided by the dependent claims, and it is to be understood that any preferred feature may be a feature, including a preferred feature, of any aspect of the invention.

The present invention also provides a chuck for a power tool having a rotatable drive shaft. The chuck includes a chuck body and a plurality of jaws slidably mounted to the chuck body. The chuck preferably includes an inner sleeve defining a cavity into which the chuck body is rotatably received. An outer sleeve preferably is disposed concentrically around the inner sleeve. The outer sleeve preferably is non-rotatably but axially slidably coupled to the inner sleeve.

In another aspect, the present invention provides a chuck for a power tool having a rotatable drive shaft. The chuck comprises a chuck body coupled to the drive shaft and rotatable about an axis. An extendable sleeve assembly preferably is provided including an inner sleeve defining a cavity into which the chuck body is rotatably received. An outer sleeve preferably is disposed concentrically around the inner sleeve, the outer sleeve preferably being non-rotatably but axially slidably coupled to the inner sleeve. A cover plate preferably is non-rotatably coupled to the chuck body. A locking cup preferably is non-rotatably coupled to the power tool and disposed adjacent to the chuck. At least one pawl preferably is coupled to the cover plate. The pawl preferably is outwardly biased and extends a radial distance past an outer diameter of the inner sleeve. The pawl preferably is adapted to contact an interior surface of the locking cup, to restrict rotational movement between the cover plate and the locking cup in at least one rotational direction.

In yet another aspect, the present invention provides a rotary power tool including a housing, a motor, and a rotatable drive shaft. A chuck assembly is provided comprising a chuck body coupled to the drive shaft and preferably an extendable chuck sleeve including an inner sleeve defining a cavity into which the chuck body is rotatably received. An outer sleeve preferably is disposed concentrically around the inner sleeve, the outer sleeve being non-rotatabiy but axially slidably coupled to the inner sleeve. A cover plate preferably is non-rotatably coupled to the chuck body. A locking cup preferably is non-rotatably coupled to the housing and disposed adjacent to the chuck assembly. The power tool preferably includes a controller interrupting power supplied to the motor when the chuck body is non-rotatably coupled to the locking cup.

The drawings described herein are for illustrative purposes only of selected embodiments of the invention and not all possible implementations.
Figure 1 is a perspective view of a portion of a power tool having a chuck assembly constructed in accordance with the teachings of the present invention, the chuck assembly having an outer chuck sleeve disposed in a standard position;
Figure 2 is a cross-sectional view taken along the line 2-2 of Figure 1;
Figure 3 is an exploded perspective view of a portion of the power tool of Figure 1;
Figure 4 is an exploded perspective view of a portion of the power tool of Figure 1 in which a locking cup is exploded from a remainder of the chuck assembly, the outer sleeve being shown in the standard position;
Figure 5 is a rear plan view of the chuck assembly;
Figure 6 is a view similar to that of Figure 4 but depicting the outer sleeve in an extended position;
Figure 7 is an exploded perspective view of a portion of the power tool of Figure 1, illustrating the outer sleeve exploded from a remainder of the chuck assembly;
Figure 8 is a rear perspective view of the outer sleeve of the chuck assembly;
Figure 9 is a cross-sectional view of a portion of the chuck assembly taken along the line 9-9 of Figure 7 with the outer sleeve being shown in the standard position; and
Figure 10 is a schematic side view of another rotary power tool constructed in accordance with the teachings of the present disclosure.

Corresponding reference numerals indicate corresponding parts throughout the several views of the drawings.

Example embodiments of the invention will now be described more fully with reference to the accompanying drawings.

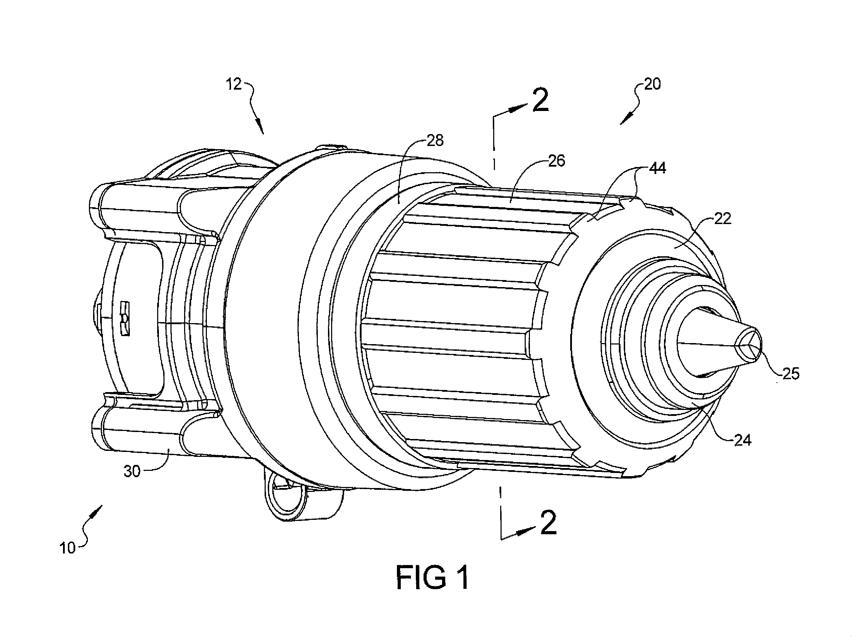

The present invention relates to an extendable chuck assembly for a rotary-type power tool. With reference to Figure 1 of the drawings, a portion of an exemplary rotary power tool 10 is illustrated as including a tool body 12 and a chuck assembly 20 that is constructed in accordance with the present teachings. As those of ordinary skill in the art will appreciate, the power tool 10 may be either a corded or cordless (i.e., battery operated) device, such as a drill, screwdriver, impact wrench-type power tool, hammer drill, and other mid-handle or end-handle type rotary power tools.

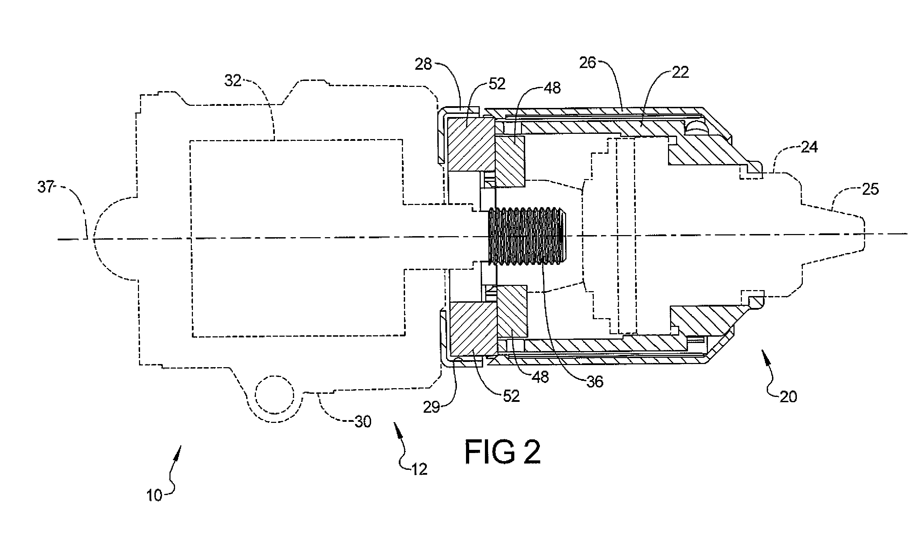

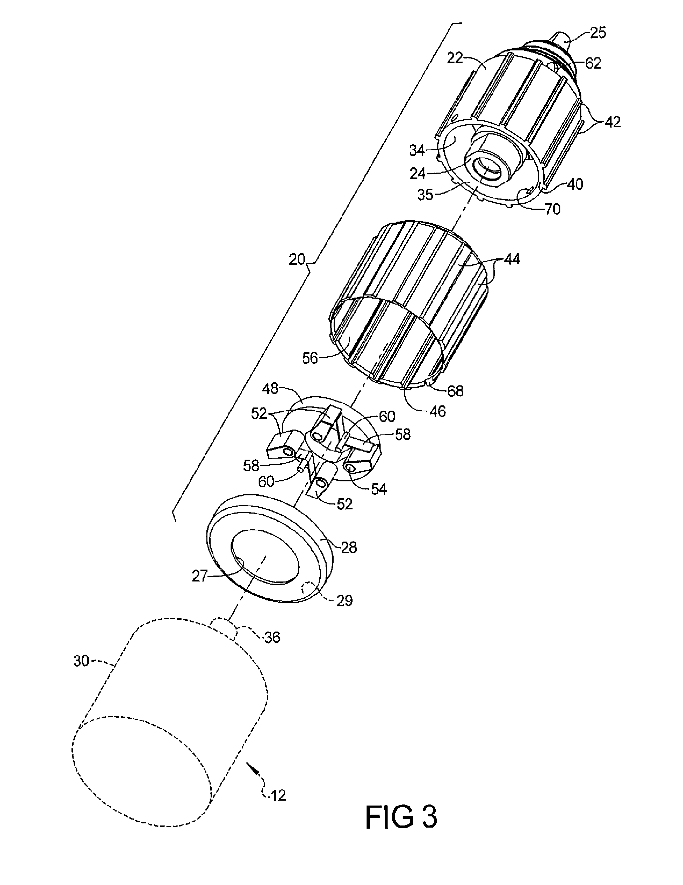

With additional reference to Figures 2 and 3, the tool body 12 can include a housing 30, a motor (not shown), a transmission 32, an output spindle 36, and a locking cup 28. Briefly, the housing 30 can house the motor and the transmission 32. The motor can be coupled to a source of electrical power, such as a battery pack (not shown) through a trigger switch (not shown). An output of the motor, such as a rotatable drive shaft, can drive an input of the transmission 32. The transmission 32 can provide a torque multiplication and speed reduction function and can drive the output spindle 36. The locking cup 28 can be fixedly coupled to the housing 30 and will be described in more detail below.

Figure 1 is a perspective view of an extendable chuck assembly 20 according to various aspects of the present disclosure. The chuck assembly 20 may include a generally cylindrical inner sleeve 22 that houses a chuck body 24. A plurality of gripping jaws 25 can be slidably mounted to the chuck body 24, configured for releasably engaging assorted drill bits or accessory tools (not shown) as is commonly known in the art. It is envisioned that the present disclosure is operable with various different types of chuck bodies and their internal adjustment mechanisms. Thus, for purposes of this disclosure, the details of the chuck body 24 will not be described in detail. A generally cylindrical outer sleeve 26 can be concentrically disposed around the inner sleeve 22. The outer sleeve 26 can be non-rotatably but axially slidably coupled to the inner sleeve 22. In various aspects, the inner and outer sleeves 22, 26 can be made from a rigid thermoplastic or from die cast metals such as aluminum, zinc, alloys of aluminum and zinc, or similar materials. Depending on the geometry and general shape of the inner and outer sleeves 22, 26, they may also be formed from drawn or forged metals such as steel or aluminum, or from a composite of formed metals and molded thermoplastics and or cast metals. Referring to Figures 1 and 2, a locking cup 28, such as a metallic cup-shaped component, can be non-rotatably coupled to the housing 30 and may be disposed adjacent to, but not in direct contact with, the outer sleeve 26 of the chuck assembly 20. As shown, the locking cup 28 can be in close proximity to the transmission 32 of the rotary power tool.

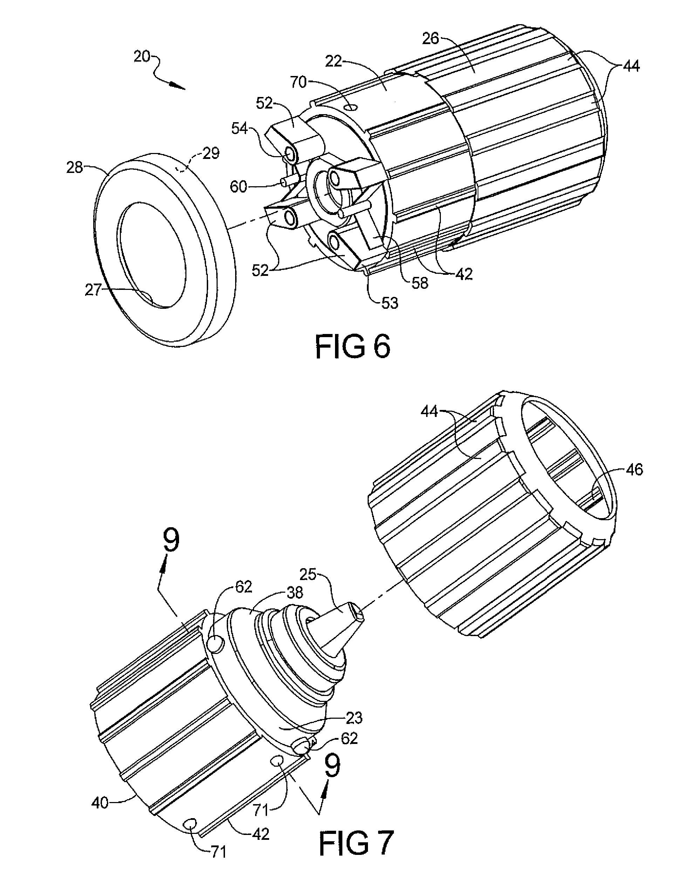

With specific reference to Figures 2 and 3, the inner sleeve 22 defines a cavity 34 into which the chuck body 24 is rotatably received. The cavity 34 may define various internal projections and shapes, such as an internal seating surface to accept the chuck body 24 (as shown in Figure 7). The chuck body 24 may be coupled to the output spindle 36 for rotation therewith about a rotational axis 37. The inner sleeve 22 can have a forward end 38 near the exposed gripping jaws 25 and an opposing rearward end 40. The inner sleeve 22 can be provided with a plurality of spaced apart ribs 42, while the outer sleeve 26 can be provided with corresponding projections 44 defining spaced apart grooves or channels 46 that align with and matingly engage the spaced apart ribs 42. The mating ribs 42 and channels 46 cooperate to guide the outer sleeve 26 when it is moved axially on the inner sleeve 22, and additionally inhibit relative rotational movement between the inner sleeve 22 and the outer sleeve 26. The mating ribs 42 and channels 46 permit co-rotation of inner sleeve 22 and outer sleeve 26 notwithstanding the location of the outer sleeve 26, i.e., whether it is in the standard position or in an extended position.

As shown in Figures 2 - 6, a cover plate 48 can be provided non-rotatably coupled to the chuck body 24. The cover plate 48 can be located adjacent an interior edge 35 of the cavity 34 and can be aligned flush with the rearward end 40 of the inner sleeve 22. As an example, the cover plate 48 can define a non-circular aperture 50 that matingly engages a complementarily shaped portion of the chuck body 24 such that the cover plate 48 co-rotates with the chuck body 24. The cover plate 48 can be formed of any desired material, such as steel. As shown, the cover plate 48 defines a somewhat oval aperture 50 formed having two opposing straight sections to engage a matching geometry of the end of the chuck body 24. The outer sleeve 26 may be longer than the inner sleeve 22 and extend a distance past the rearward end 40 when in the standard position.

The outer sleeve 26 is movable with respect to the inner sleeve 22 in an axial direction between what may be referred to herein as a standard position, where the outer sleeve 26 is positioned in a location covering the inner sleeve 22 and proximate to the locking cup 28 (Figures 1 and 2), and an extended position, where the outer sleeve 26 is moved an axial distance away from the locking cup 28 and at least a portion of the inner sleeve 22 may be exposed (Figure 6). It should be understood that the outer sleeve 26 can be slidably moved with respect to the inner sleeve 22, stopping at various interim positions between the standard position and a fully extended position, i.e., the point where further axial movement would cause the outer sleeve 26 to be removed from (no longer coupled to) the inner sleeve 22, or where the outer sleeve 26 has contacted an optional stop means preventing further axial movement. The outer sleeve 26 can be slidably moved from the standard position to an extended position, and vice versa, by the operation of a user gripping and sliding the outer sleeve 26 in an axial direction with respect to the inner sleeve 22.

The slidable movement of the outer sleeve 26 on the inner sleeve 22 can function to selectively lock and unlock rotational movement of the chuck body 24 with respect to the tool body 12. As will be discussed, when the outer sleeve 26 is in an extended position (Figure 6), the chuck body 24 can be rotationally locked to the tool body 12. When the chuck body is rotationally locked to the tool body 12, a user can adjust the jaws 25 via rotation of the co-rotating inner sleeve 22 and outer sleeve 26. When the outer sleeve 26 is in the standard position, the chuck body 24 can be unlocked from the tool body 12 such that the power tool 10 can be operated. Figure 2 illustrates a cross-sectional view of the chuck assembly 20 taken along the line 2-2 of Figure 1 (details of the transmission 32 are omitted), when the outer sleeve 26 is in the standard position.

In addition to the ability to selectively lock and unlock rotational movement of the chuck body 24 with respect to the tool body 12, the present teachings can also include the ability to selectively lock and unlock rotational movement of the chuck body 24 with respect to the outer sleeve 26, for example, to prevent chuck loosening during operation of the power tool 10. Accordingly, the present teachings provide at least one first locking element, such as a pawl 52, coupled to the chuck body 24 (directly or indirectly) that is configured to engage at least one second locking element that is fixedly coupled to either the tool body 12 or the outer sleeve 26, cooperating with the at least one first locking element to prevent relative rotational movement in at least one rotational direction. In one example, the at least one first locking element is a pawl 52 that can be coupled to the cover plate 48, which is in turn non-rotatably coupled to the chuck body 24, as shown in Figures 2 and 3. In another aspect, the at least one first locking element comprises a plurality of pawls 52. The at least one second locking element can be a radially extending clutch surface, such as an interior surface 29 of the locking cup 28, or an interior surface 56 of the outer sleeve 26.

In the standard position or sleeve lock position, the outer sleeve 26 is positioned on the inner sleeve 22 such that at least one first locking element is adapted to restrict movement between the cover plate 48 and the outer sleeve 26. As shown in Figures 2 - 6, a plurality of pawls 52 can be rotatably coupled to the cover plate 48. The pawls 52 may comprise a metal, rigid thermoplastic, a composite of metal and thermoplastic, or a similar type of material suitable for providing gripping engagement between components. The pawls 52 may be pivotally coupled to the cover plate 48, for example via fastening members 54 such as pins, rivets, or screws. The pawls 52 may be flush with the cover plate 48 (as shown), or extend an axial distance therefrom. With the outer sleeve 26 in the standard position as shown in Figures 1, 2, 4, and 5, at least one and preferably all of the pawls 52 are biased in a radially outward direction from the inner sleeve 22 such that they contact an inner diameter or the interior surface 56 of the outer sleeve 26. In various aspects, this can prevent relative rotational movement between the outer sleeve 26 and the cover plate 48 in at least one rotational direction. In the particular example provided, the pawls 52 are biased in a radially outward direction by one or more spring members 58 that are affixed to the cover plate 48 in a suitable manner, such as by one or more spring pins 60. It will be appreciated from this disclosure that contact between the pawls 52 and the interior surface 56 of the outer sleeve 26 will non-rotatably couple the cover plate 48 and the outer sleeve 26, thus providing a positive locking of the chuck assembly 20 when the power tool 10 is operated and the output spindle 36 (Figure 3) is rotating.

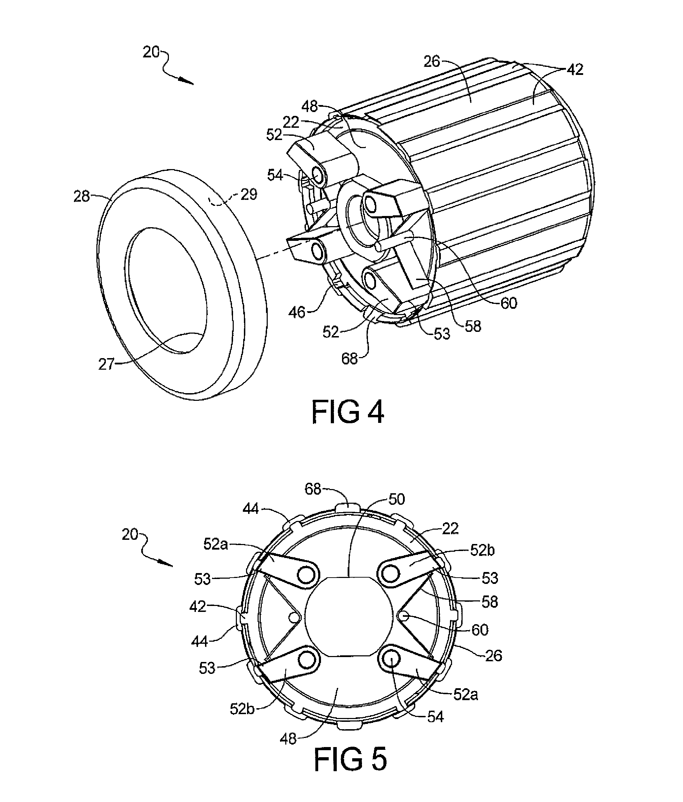

The chuck assembly 20 may include two biased pairs of opposing pawls 52 coupled to the cover plate 48, for a total of four pawl locking elements. With reference to Figure 5, two of the pawls 52a may be outwardly biased toward and contacting an interior surface 56 of the outer sleeve 26 to restrict clockwise rotational movement between the cover plate 48 and the outer sleeve 26. The other two pawls 52b may be similar outwardly biased toward and contacting an interior surface 56 of the outer sleeve 26 and restrict counter-clockwise rotational movement between the cover plate 48 and the outer sleeve 26. In various aspects, the edges 53 of the pawls 52 may mate or "lock" with the internal channels 46 of the outer sleeve 26 to prevent the respective rotational movement in at least one rotational direction. Fewer or additional pawls 52 may be used as desired for the intended use.

In various aspects, movement of the outer sleeve 26 in an extended position may provide up to an 80%-90% longer effective sleeve length as compared to when the outer sleeve 26 is in the standard position, allowing a respective 80%-90% increase in the available gripping area of the chuck assembly 20. This additional sleeve length and gripping area may allow for the application of an increased tightening torque generated by a user, which may reduce drill bit and/or accessory tool slippage.

In a chuck body or spindle lock position, the outer sleeve 26 is in an extended position on the inner sleeve 22 such that at least one first locking element is adapted to restrict movement between the output spindle 36 and the tool body 12. As shown in Figure 6, at least one of the pawls 52 can be outwardly biased toward and contact an interior surface 29 of the locking cup 28, thereby restricting rotational movement between the cover plate 48 and the locking cup 28 in at least one rotational direction. This restricts movement between the output spindle 36 and the tool body 12 (Figure 3). For example, when the outer sleeve 26 is slid from the standard position of Figure 4 to the extended position of Figure 6, the pawls 52 are no longer restricted by the inner diameter or interior surface 56 of the outer sleeve 26 and are further outwardly biased until they make contact with an interior surface 29 of the adjacent locking cup 28. It should be understood that in order for the pawls 52 to not additionally make contact with the locking cup 28 when the outer sleeve 26 is in the standard position, the locking cup 28 should be provided with an inner diameter that is slightly larger than an inner diameter of the outer sleeve 26.

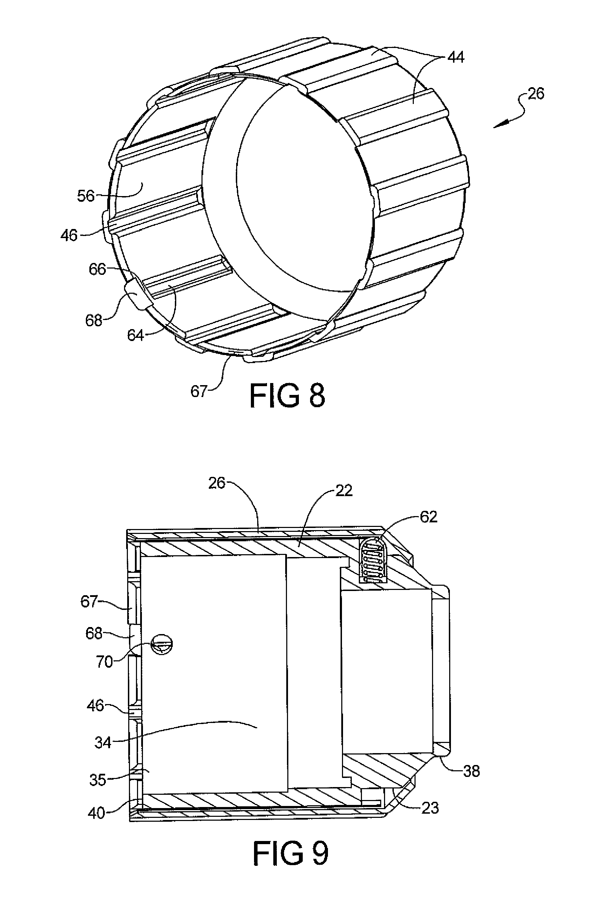

With reference to Figure 6, two of the pawls 52a (identified in Figure 5) may be outwardly biased toward and contacting an interior surface 29 of the locking cup 28 to restrict clockwise rotational movement between the cover plate 48 and the locking cap 28. The other two pawls 52b may be similarly outwardly biased toward and contacting an interior surface 29 of the locking cup 28 and restrict counter-clockwise rotational movement between the cover plate 48 and the locking cup 28. When the outer sleeve 26 is axially moved back to the standard position, where the outer sleeve 26 is positioned on the inner sleeve 22 in a manner to restrict rotational movement between the chuck body 24 and the outer sleeve 26, the pawls 52 are urged back in a radially inward direction upon contact with the edge of the outer sleeve 26 and remain in contact with the interior surface 56 of the outer sleeve 26, preventing relative rotational movement between the outer sleeve 26 and the cover plate 48 in at least one rotational direction. In various aspects, a converging edge of one or both of the outer sleeve 26 (reference 67 of Figures 8 and 9) and/or the pawls 52 (not shown) can define a chamfer or cam surface to reduce friction between the two components 26, 52 and urge the pawls 52 radially inward.

Figure 7 illustrates a partial exploded perspective view of the extendable chuck assembly 20 showing the inner sleeve 22 and the outer sleeve 26. Figure 8 illustrates a rear perspective view of the outer sleeve 26. With reference to Figure 7, the chuck assembly 20 may be provided with one or more spaced apart detents 62 extending from an outer perimeter 23 of the inner sleeve 22 that can be configured to make contact with an interior surface 56 of the outer sleeve 26. The detents 62 may take up any clearance between the inner sleeve 22 and the outer sleeve 26, and can keep the outer sleeve 26 centered while in an extended position. As shown, the chuck sleeve assembly 20 can be provided with a plurality detents 62, for example, three detents 62 spaced apart 120 degrees from one another. Figure 9 is a cross-sectional view of the chuck assembly 20 taken along the line 9-9 of Figure 7, with the outer sleeve 26 shown in the standard position (and the details of the chuck body 24 omitted). In certain aspects as depicted in Figure 9, the detents 62 may include spring loaded bullet shaped cups or pins coupled or attached to the inner sleeve 22 in a known manner. In other aspects, the detents 62 may comprise a compliant plastic material, or the like. The detents 62 may be biased against the interior surface 56 of the outer sleeve 26, creating a friction drag during the slidable movement of the outer sleeve 26 between the standard position and the extended position while keeping the outer sleeve 26 centered on and concentric with the inner sleeve 22. The friction may create a desired user feel and may maintain a fixed rate of slidable movement. The friction may also prevent and/or minimize unwanted slidable movement between the inner sleeve 22 and the outer sleeve 26 that may otherwise occur due to gravity, inertia, or other means not initiated by the user.

With reference to Figures 7 and 8, certain of the channels 64 formed in the outer sleeve 26 may include a chamfered or raised edge 66 including a small ramp portion 68. As shown in Figures 6 and 7, the inner sleeve may define one or more bores 70 to retain additional detents or projections 71, such as a pressed ball or pin, which can also act as axial retention or stop means to prevent and/or minimize unwanted slidable movement between the inner sleeve 22 and the outer sleeve 26. The additional projections 71 can be strategically positioned at locations on the inner sleeve 22 for a desired purpose. During the initial assembly of the chuck 20, the ramp 68 of the outer sleeve 26 can allow the projection(s) 71 to pass over the raised edge 66, but not allow the projection(s) 71 to pass when the outer sleeve 26 is pulled out to the fully extended position. For example, a projection 71 can interact with a raised edge 66 (Figure 8) when a user axially pulls the outer sleeve 26 toward the fully extended position. Additionally, the ramp 68 on the raised edge 66 may interact with a projection 71 to provide a secure "home" or standard position lock for the sliding sleeves and/or serve as a stop to prevent the outer sleeve 26 from inadvertently being removed or detached (i.e., completely disengaged) from the inner sleeve 22.

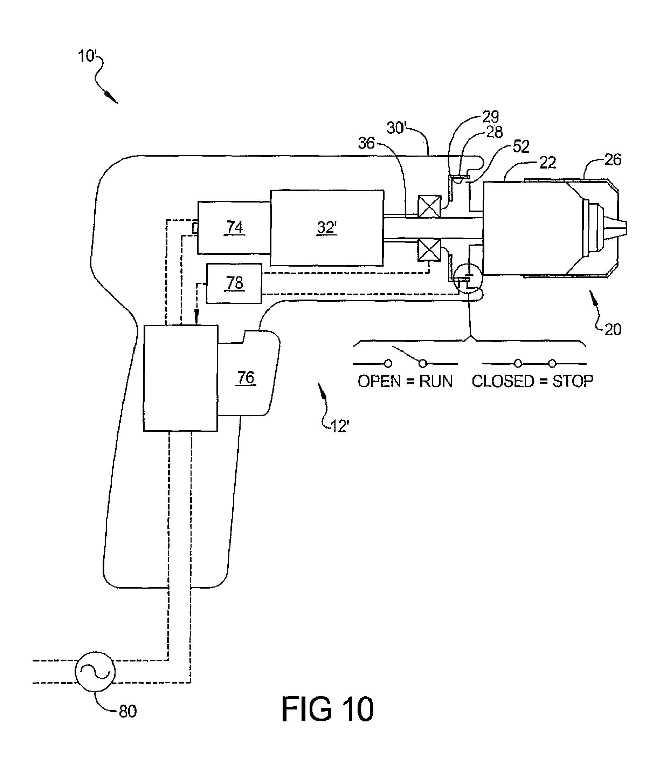

With reference to Figure 10, a second power tool constructed in accordance with the teachings of the present disclosure is generally indicated by reference numeral 10'. The power tool 10' can comprise a tool body 12' and the chuck assembly 20 that is described in detail above. As shown, the tool body 12' may include a motor 74, transmission 32', and trigger assembly 76 disposed within a conventional type housing 30'. Although shown with a corded power supply 80, the power tool 10' may also be battery operated (not shown). The tool body 12' can be generally similar to the tool body 12 of Figure 1, but includes a controller 78 that interrupts power to the motor 74 when the outer sleeve 26 is disposed in the extended position, locking rotational movement between the output spindle 36 and the tool body 12'. For example, the controller 78 can be programmed to prevent the motor 74 from driving the output spindle 36 (through the transmission 32') when the chuck jaws (not specifically shown) are being loosened or tightened.

In one aspect, the controller 78 can be programmed and configured to detect an electrical contact between the output spindle 36 and the locking cup 28, via the chuck assembly 20. For example, the controller 78 may include a suitable sensing circuit, electrical signal processor such as a micro-processor, or an electrical component like a relay, as is known in the art, to determine the logic for allowing the trigger switch 76 to energize the motor 74.

A metallic locking cup 28 can be fastened to an area of the housing 30' that is electrically isolated and insulated from the rest of the tool body 12'. With the outer sleeve 26 moved a distance away from the locking cup 28 in an extended position, the pawls 52 are no longer restricted by the inner diameter or interior surface 56 of the outer sleeve 26 and are further outwardly biased until they make contact with the interior surface 29 of the locking cup 28. With renewed reference to Figure 3, the output spindle 36 passes through an aperture 27 defined in the locking cup 28 (i.e., without making contact) and may be coupled to the chuck body 24, which is non-rotatably coupled to the cover plate 48. The pawls 52 are fastened to the cover plate 48. Each of the output spindle 36, locking cup 28, chuck body 24, cover plate 48, and pawls 52 may comprise a metallic or otherwise electrically conductive material. When there is continuity, or a closed electrical circuit, detected between the locking cup 28 and the output spindle 36, for example via at least one pawl 52 being outwardly biased against and making contact with an interior surface 29 of the locking cup 28 when the outer sleeve 26 is in an extended position, a spindle locked condition exists and the controller 78 interrupts the power supplied to the motor 74. When the outer sleeve 26 is slidably moved back into the standard position as shown in Figure 1 to unlock the spindle, the pawl(s) 52 are inwardly biased to contact the interior surface 56 of the outer sleeve 26, which opens the circuit between the locking cup 28 and the output spindle 36. Once the circuit is opened, the controller 78 may allow power to be directed to the motor 74 for operation of the power tool 10' using the trigger assembly 76.

In another aspect, a non-contact type sensor, such as a Hall Effect sensor, can be located on or near the locking cup 28 in close proximity to a rear edge of the outer sleeve 26, adapted to detect when the outer sleeve 26 is displaced from the standard position, and to selectively prohibit energizing of the motor 74.

The foregoing description of embodiments of the invention has been provided for purposes of illustration and description. It is not intended to be exhaustive, Individual elements or features of a particular embodiment are generally not limited to that particular embodiment, but, where applicable, are interchangeable and can be used in a selected embodiment, even if not specifically shown or described.

## Claims

1. A chuck for a power tool having a rotatable drive shaft, comprising:
a chuck body;
a plurality of jaws slidably mounted to the chuck body;
an inner sleeve defining a cavity into which the chuck body is rotatably received; and
an outer sleeve disposed concentrically around the inner sleeve, the outer sleeve being non-rotatably but axially slidably coupled to the inner sleeve.

2. The chuck of claim 1, further comprising a cover plate non-rotatably coupled to the chuck body.

3. The chuck of claim 2, further comprising at least one locking element coupled to the cover plate, the at least one locking element being outwardly biased toward and extending a radial distance past an outer diameter of the inner sleeve, the at least one locking element being adapted to contact an interior surface of the outer sleeve to restrict rotational movement between the cover plate and the outer sleeve in at least one rotational direction.

4. The chuck of claim 2 or claim 3, further comprising two pairs of opposing pawls coupled to the cover plate, one of each pair of the opposing pawls being outwardly biased toward and adapted to contact an interior surface of the outer sleeve and restricting clockwise rotational movement between the cover plate and the outer sleeve, and the other one of each pair of pawls being outwardly biased toward and adapted to contact the interior surface of the outer sleeve and restricting counter-clockwise rotational movement between the cover plate and the outer sleeve.

5. The chuck of claim 2 or any claim dependent thereon, further comprising:
a locking cup non-rotatably coupled to the power tool and disposed adjacent to the chuck; and
at least one pawl coupled to the cover plate,
wherein the at least one pawl is outwardly biased toward and adapted to contact an interior surface of the locking cup to restrict rotational movement between the cover plate and the locking cup in at least one rotatable direction.

6. The chuck of any preceding claim, further comprising a plurality of spaced apart detents extending from the inner sleeve and contacting an interior surface of the outer sleeve.

7. The chuck of claim 6, wherein at least one of the spaced apart detents comprises a spring loaded pin coupled to the inner sleeve and biased against the interior surface of the outer sleeve creating a friction drag during slidable movement of the outer sleeve with respect to the inner sleeve.

8. The chuck of any preceding claim, wherein the inner sleeve comprises a plurality of spaced apart ribs and the outer sleeve comprises a plurality of spaced apart channels that align with and engage the spaced apart ribs.

9. A chuck for a power tool having a rotatable drive shaft, the chuck comprising:
a chuck body coupled to the drive shaft and rotatable about an axis;
an extendable sleeve assembly including:
an inner sleeve defining a cavity into which the chuck body is rotatably received; and
an outer sleeve disposed concentrically around the inner sleeve, the outer sleeve being non-rotatably but axially slidably coupled to the inner sleeve;
a cover plate non-rotatably coupled to the chuck body;
a locking cup non-rotatably coupled to the power tool and disposed adjacent to the chuck; and
at least one pawl coupled to the cover plate, the at least one pawl being outwardly biased and extending a radial distance past an outer diameter of the inner sleeve and adapted to contact an interior surface of the locking cup, restricting rotational movement between the cover plate and the locking cup in at least one rotational direction.

10. The chuck of claim 9, wherein the inner sleeve comprises a plurality of spaced apart ribs and the outer sleeve comprises a plurality of spaced apart channels that align with and engage the spaced apart ribs.

11. The chuck of claim 10, further comprising at least one spring member outwardly biasing the at least one pawl to extend a radial distance past an outer diameter of the inner sleeve and into engagement with one of the plurality of spaced apart channels, restricting rotational movement between the cover plate and the outer sleeve in at least one rotational direction.

12. The chuck of claim 9 or any claim dependent thereon, wherein the at least one pawl is outwardly biased and extends a radial distance past an outer diameter of the inner sleeve, the at least one pawl being adapted to contact an interior surface of the outer sleeve, restricting rotational movement between the cover plate and the outer sleeve in at least one rotational direction.

13. The chuck of claim 9 or any claim dependent thereon, further comprising a plurality of spaced apart detents extending from the inner sleeve and contacting an interior surface of the outer sleeve.

14. The chuck of claim 13, wherein at least one of the plurality of spaced apart detents comprises a spring loaded pin coupled to the inner sleeve and is biased against the interior surface of the outer sleeve creating a friction drag during slidable movement of the outer sleeve with respect to the inner sleeve.

15. A rotary power tool, comprising:
a housing;
a motor;
a rotatable output spindle;
a chuck assembly comprising a chuck body coupled to the output spindle and an extendable chuck sleeve including:
an inner sleeve defining a cavity into which the chuck body is rotatably received;
an outer sleeve disposed concentrically around the inner sleeve, the outer sleeve being non-rotatably but axially slidably coupled to the inner sleeve; and
a cover plate non-rotatably coupled to the chuck body;
a locking cup non-rotatably coupled to the housing and disposed adjacent to the chuck assembly; and
a controller interrupting power supplied to the motor when the chuck body is non-rotatably coupled to the locking cup.

16. The rotary power tool of claim 15, further comprising at least one pawl coupled to the cover plate, the at least one pawl being outwardly biased and extending a radial distance past an outer diameter of the inner sleeve, the at least one pawl being adapted to contact an interior surface of the locking cup, closing an electrical circuit between the output spindle and the locking cup, and preferably the at least one pawl is outwardly biased and extends a radial distance past an outer diameter of the inner sleeve, the at least one pawl being adapted to contact an interior surface of the outer sleeve and restrict rotational movement between the cover plate and the outer sleeve in at least one rotational direction.

17. The rotary power tool of claim 15 or claim 16, wherein the controller is programmed to detect an electrical contact between the output spindle and the locking cup.

18. The rotary power tool of claim 15 or any claim dependent thereon, further comprising a plurality of spaced apart detents extending from the inner sleeve and contacting an interior surface of the outer sleeve, and preferably at least one of the plurality of detents comprises a spring loaded pin coupled to the inner sleeve and biased against the interior surface of the outer sleeve creating a friction drag during slidable movement of the outer sleeve with respect to the inner sleeve.
